# FASCICULE DE BREVET EUROPEEN

(11) **EP 0 907 823 B1**
(45) Date de publication et mention de la délivrance du brevet: **07.06.2000**
(21) Numéro de dépôt: 97930574.5
(22) Date de dépôt: 24.06.1997
(51) Int. Cl.: F01N 3/02, F01N 3/08, F01N 7/08, B60K 13/04

(54) **DISPOSITIF ET PROCEDE DE FILTRATION DES GAZ D'ECHAPPEMENT D'UN MOTEUR A COMBUSTION INTERNE ET VEHICULE EQUIPE D'UN TEL DISPOSITIF**
VORRICHTUNG UND VERFAHREN ZUM FILTERN DER ABGASE EINES VERBRENNUNGSMOTORS UND FAHRZEUG AUSGESTATTET MIT EINER SOLCHEN VORRICHTUNG
DEVICE AND METHOD FOR FILTERING INTERNAL COMBUSTION ENGINE EXHAUST GASES AND VEHICLE EQUIPPED WITH SUCH A DEVICE

(30) Priorité: 25.06.1996 FR 9608198
(43) Date de publication de la demande: 14.04.1999
(73) Titulaire: Teboul, Daniel, 92240 Malakoff (FR)
(72) Inventeur: Teboul, Daniel, 92240 Malakoff (FR)
(74) Mandataire: Rinuy, Santarelli
(86) Numéro de dépôt international: FR9701121
(87) Numéro de publication internationale: WO9749904

(56) Documents cités:
- EP-A- 0 346 803
- DE-A- 3 235 953
- DE-C- 316 252
- GB-A- 792 603
- GB-A- 923 431
- GB-A- 2 218 354
- US-A- 3 228 755
- US-A- 3 417 549
- US-A- 3 503 188
- US-A- 4 020 915
- US-A- 4 338 784
- US-A- 4 706 455
- US-A- 5 012 641
- PATENT ABSTRACTS OF JAPAN vol. 017, no. 106 (M-1375), 4 mars 1993 & JP 04 297341 A (NAGATOSHI SUZUKI), 21 octobre 1992,

## Description

La présente invention a trait à l'élimination de composants polluants ou impuretés, solides, liquides ou gazeux, des gaz d'échappement d'un moteur à combustion interne.

Une application particulière, mais non exclusive, est la purification des gaz d'échappement d'un moteur Diesel.

De très nombreux procédés et dispositifs de filtration des gaz d'échappement d'un moteur à combustion interne ont déjà été proposés par le passé.

En particulier, il est connu du document GB-A-923 431, un procédé pour éliminer des impuretés solides, liquides et gazeuses d'un courant de gaz chauds dans lequel celles-ci sont entraînées, et qui comporte les étapes consistant à ajouter de l'air frais et propre aux gaz en une quantité telle et dans des conditions telles que le courant de gaz est refroidi jusqu'à une température inférieure au point de condensation du composant parmi les impuretés gazeuses ayant le point d'ébullition le plus bas, ce qui fait que les composants individuels formant les impuretés gazeuses se condensent successivement et forment des gouttelettes qui se déposent sur les impuretés liquides et solides également contenues dans le courant de gaz, formant ainsi des particules de tailles plus importantes. Les particules liquides et solides ainsi obtenues sont ensuite séparées du courant de gaz dans une chambre de séparation.

Dans une application à un moteur à combustion interne, avant l'adjonction du courant d'air frais et propre, le courant de gaz chauds est déjà mis en circulation dans un échangeur de chaleur pour refroidir celui-ci et la chambre de séparation consiste en un électro-filtre.

Il est également connu du document EP-A-0 346 803, un procédé pour l'élimination en continu de la suie et des composants volatils condensables des gaz d'échappement d'un moteur Diesel, dans lequel ont fait passer alternativement les gaz d'échappement chauds du moteur Diesel dans deux échangeurs de chaleur, la suie et les composants volatils condensables des gaz se déposant partiellement sur les surfaces de l'échangeur de chaleur. Les gaz d'échappement, refroidis et chargés du reste de suie et de composants condensables, passent ensuite dans un séparateur de particules grossières ou un filtre céramique puis, dans l'un des modes de réalisation, par un dispositif de séparation électrostatique. Lorsque l'un des échangeurs de chaleur est partiellement ou totalement colmaté par la suie et les composants volatils condensables, celui-ci est chauffé et nettoyé par combustion, tandis que l'épuration des gaz chauds a lieu par passage dans l'autre échangeur de chaleur.

De tels dispositifs et procédés de filtration sont relativement complexes et donc peu aisés et coûteux à mettre en oeuvre.

La présente invention vise à pallier ces inconvénients.

Elle vise notamment à proposer une technologie de filtration qui soit simple et aisée à mettre en oeuvre, tout en étant au moins aussi efficace que les technologies existantes. Elle vise également à proposer un dispositif de filtration compact et adaptable à tout véhicule automobile.

Elle propose pour ce faire, d'une manière générale, un dispositif de filtration des gaz d'échappement d'un moteur à combustion interne, comportant une chambre de filtration électrostatique équipée de moyens de filtration électrostatique, une ligne d'amenée des gaz d'échappement dans la chambre de filtration, raccordée fluidiquement à une entrée de la chambre de filtration, à l'une des extrémité de la ligne d'amenée, l'autre extrémité de la ligne d'amenée étant pourvue d'une embouchure dont l'orifice d'entrée est adapté à permettre la pénétration des gaz d'échappement ainsi que d'un flux d'air ambiant destiné à abaisser la température des gaz d'échappement, caractérisé en ce que des moyens d'aspiration destiné à aspirer les gaz d'échappement et le flux d'air sont montés en aval d'une sortie de la chambre de filtration et raccordés fluidiquement à cette sortie, pour faire passer le mélange de gaz d'échappement et d'air dans ladite chambre de filtration et rejeter des gaz filtrés dans le milieu ambiant et en ce qu'un filtre à particules solides et à gouttelettes provenant du mélange est monté dans la chambre de filtration, en amont des moyens de filtration électrostatique.

La combinaison d'un filtre mécanique, de moyens de filtration électrostatique et l'aspiration au travers de ceux-ci d'un mélange de gaz d'échappement chauds et d'air ambiant de refroidissement permet de filtrer ces gaz d'échappement de manière particulièrement efficace et simple. De plus, le dispositif en résultant est compact et aisé à mettre en oeuvre.

Plus particulièrement, les moyens d'aspiration permettent de faire pénétrer un mélange des gaz d'échappement chauds et d'air ambiant de refroidissement dans la ligne d'amenée et faire passer ce mélange dans la chambre de filtration à débit constant.

En outre, les gaz d'échappement sont efficacement refroidis et n'endommagent donc pas les moyens de filtration électrostatique.

Par ailleurs, le filtre mécanique, en particulier lorsque celui-ci est constitué par un filtre à chocs , permet d'obtenir une pression sensiblement constante sur l'ensemble de la surface d'entrée des moyens de filtration électrostatique.

De préférence, un autre filtre à particules solides et à gouttelettes est monté en aval des moyens de filtration électrostatique, dans la chambre de filtration. Ainsi, le traitement des gaz d'échappement dans les moyens de filtration électrostatique se fait sur l'ensemble du volume utile de ces moyens, sans volume mort qui pourrait résulter de phénomènes de pertes de charge.

De préférence également, un filtre à charbon actif est monté dans la chambre de filtration, en aval dudit autre filtre .

Afin d'éviter les phénomènes de reflux et turbulences, l'embouchure de la ligne d'amenée des gaz d'échappement comporte une buse conique dont la paroi est, de préférence, percée de trous.

Dans un mode de réalisation préférée, les moyens de filtration comportent deux étages de filtration ou plus.

La présente invention propose également un procédé de filtration des gaz d'échappement d'un moteur à combustion interne, consistant à refroidir les gaz d'échappement avec un apport d'air ambiant ; à filtrer ces gaz d'échappement dans une chambre de filtration équipée de moyens de filtration électrostatique ; caractérisé en ce qu'il consiste à aspirer les gaz d'échappement et le flux d'air ambiant au travers de la chambre de filtration et à filtrer le mélange de gaz d'échappement et d'air ambiant, au moyen d'un filtre à particules solides grossières et de gouttelettes, placé en amont des moyens de filtration électrostatique.

Avantageusement, on filtre en outre le mélange de gaz d'échappement et d'air ambiant provenant des moyens de filtration électrostatique, au moyen d'un autre filtre à particules solides et à gouttelettes.

De préférence, on filtre, également, le mélange de gaz d'échappement et d'air ambiant provenant de l'autre filtre au moyen d'un filtre à charbon actif.

La présente invention propose, enfin, un véhicule automobile équipé d'un dispositif de filtration tel que défini ci-dessus.

La ligne d'amenée peut être branchée sur la sortie du pot d'échappement ou directement sur la sortie du collecteur d'échappement du moteur à combustion interne et comporte des moyens adaptés à recevoir la sortie correspondante.

D'autre part, le dispositif de filtration peut être disposé au niveau du coffre ou du compartiment moteur du véhicule.

D'autres objets, caractéristiques et avantages de la présente invention ressortent de la description qui suit, faite en référence aux dessins annexés sur lesquels :
- la figure 1 est un schéma de principe d'un dispositif de filtration conforme à un mode de réalisation de la présente invention, et
- la figure 2 est un schéma illustrant un véhicule automobile équipé du dispositif de la figure 1.

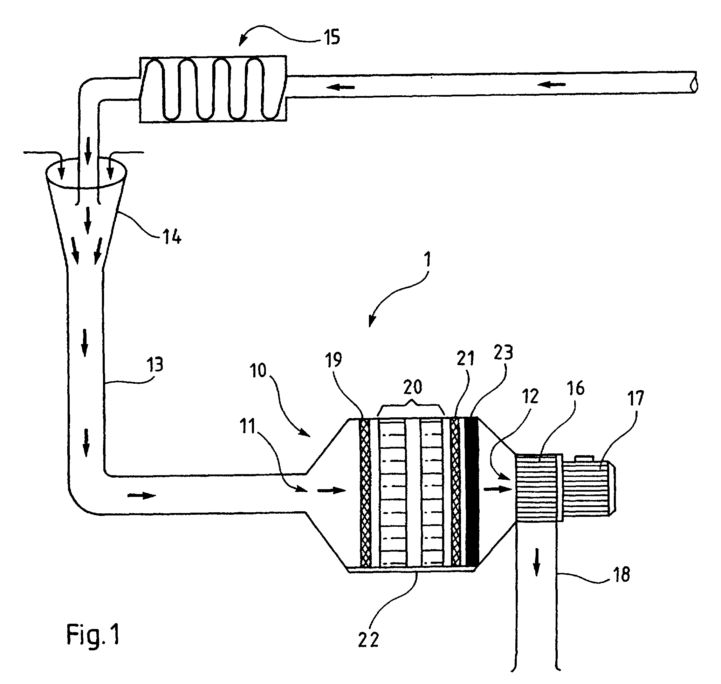

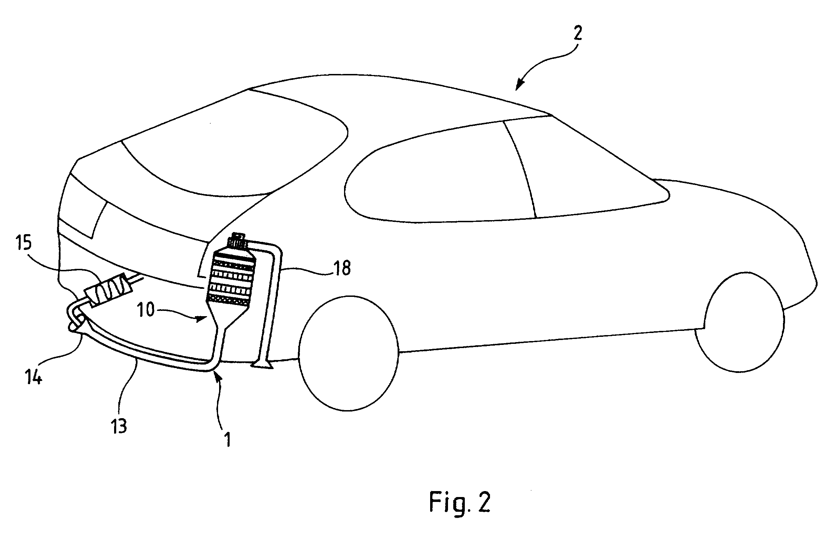

Le dispositif 1 de filtration des gaz d'échappement d'un moteur à combustion interne des figures 1 et 2 comporte une chambre de filtration 10 ayant une entrée 11 et une sortie 12.

Un ligne d'amenée 13 des gaz d'échappement ainsi que d'air ambiant frais ou de refroidissement est raccordée, par l'une de ses extrémités, à l'entrée 11. L'autre extrémité de la ligne d'amenée 13 est pourvue d'une embouchure dont l'orifice d'entrée permet la pénétration dans la ligne d'amenée des gaz d'échappement provenant d'un moteur à combustion interne, ainsi que du flux d'air ambiant de refroidissement.

En l'espèce, cette embouchure est constituée par une buse 14 conique recevant l'orifice de sortie d'un pot d'échappement 15 d'un véhicule automobile 2 illustré sur la figure 2.

Comme on le voit encore sur la figure 1, la buse conique 14 se situe, dans sa partie la plus large, dans l'axe de la sortie d'échappement sans en être solidaire et de façon à ne pas l'obstruer et, dans sa partie rétrécie, est reliée à une gaine de la ligne d'amenée 13.

On notera ici que, dans d'autres modes de réalisation, la ligne d'amenée 13 peut être montée de manière à absorber les gaz d'échappement, directement au niveau de la sortie du collecteur d'échappement du moteur à combustion interne.

Par ailleurs, afin d'améliorer la pénétration des gaz d'échappement et du flux d'air ambiant de refroidissement dans la ligne d'amenée 13 et, permettre l'évacuation des gaz d'échappement vers le milieu ambiant en cas de colmatage éventuel du dispositif de filtration 1, la paroi de la buse 14 conique et, le cas échéant, le début de la gaine de la ligne d'amenée 13, pourra être percée de trous.

D'une manière plus générale, tout autre structure d'admission pourra être mise en oeuvre, pour autant que les gaz d'échappement et le flux d'air ambiant de refroidissement puissent pénétrer dans la ligne d'amenée 13 de façon acceptable.

En pratique, l'orifice d'entrée de la ligne d'amenée 13 a une section double de celle de l'orifice de sortie des gaz d'échappement correspondant et est tourné soit vers l'arrière du véhicule, soit vers l'avant de celui-ci.

Des moyens d'aspiration 16, ici une moto-turbine, sont montés en aval de la chambre de filtration 10 et raccordés fluidiquement à la sortie 12. Ils sont entraînés par un moteur électrique 17 branché sur la batterie du véhicule 2.

Les gaz d'échappement filtrés par le dispositif 1 sont évacués vers l'atmosphère, par l'intermédiaire d'une ligne d'évacuation 18 raccordée fluidiquement aux moyens d'aspiration 16.

Les moyens d'aspiration 16 fonctionnent à dépression de telle manière à aspirer une quantité d'air ambiant, c'est à dire extérieure aux gaz d'échappement, suffisante pour refroidir ces gaz d'échappement et ne pas endommager les moyens de filtration électrostatique de la chambre de filtration 10, qui seront décrits ci-dessous. Ces moyens d'aspiration 16 fonctionnent par ailleurs de manière à avoir un débit constant tout au long du dispositif de filtration 1. En pratique et en marche, sensiblement autant d'air ambiant que de gaz d'échappement pénétreront dans la ligne d'amenée 13.

A l'arrêt du véhicule (régime au ralenti), l'air pénétrera dans la ligne d'amenée 13 avec une vitesse et une quantité supérieure au rejet des gaz d'échappement.

Par ailleurs, les gaz d'échappement sont refroidis, en pratique, jusqu'à une température inférieure à 100°C et de préférence jusqu'à une température inférieure ou égale à 80°C

La chambre de filtration 10 comporte, après l'entrée 11, un filtre à particules solides grossières (petite et moyenne granulométrie) et à gouttelettes, tel qu'un filtre comportant un cadre métallique et plusieurs couches de filets à mailles très fines, ou un filtre à chocs.

Les moyens de filtration électrostatique 20, mentionnés supra, sont, ici, à double étage, de manière à obtenir une filtration particulièrement efficace.

Plus précisément, ils comportent :
- une section ionisante ou ioniseur à double étage qui permet, en maintenant un champ électrique, de charger électrostatiquement des particules de l'ordre du centième de micron ;
- une cellule collectrice à double section à grande capacité d'accumulation constituée de plaques alternées de signe positif et négatif aptes à séparer et à retenir les microparticules chargées provenant de la section ionisante.

Ces moyens de filtration électrostatique 20 produisent des tensions de l'ordre de plusieurs milliers de volts, grâce à un module d'alimentation (non représenté) relié à la batterie du véhicule automobile 2.

Par ailleurs, un second filtre 21, du même type que le filtre 19 est monté dans la chambre de filtration 10, en aval des moyens de filtration électrostatique 20.

Le filtre métallique 21, intervient principalement quand les moyens de filtration électrostatiques 20 sont saturés ou, par exemple, lorsqu'un amas de particules solides vient à se détacher des plaques de la cellule collectrice ou cellule de captage et est entraîné par le flux de gaz d'échappement et d'air. Il a aussi des fonctions de sécurité car il est installé en amont d'un filtre à charbon actif 23 décrit ci-dessous.

On notera, à cet égard, que le filtre 19 garantit que le mélange pénètre sur toute la surface d'entrée des moyens de filtration électrostatique 20 avec une pression constante, tandis que le filtre 21 permet de garantir que la filtration électrostatique s'effectue sur tout le volume des moyens de filtration électrostatique 20. En d'autres termes, la mise en oeuvre de ces deux filtres 19 et 21 supprime les influences néfastes des pertes de charge résultant des étranglements aux entrée 11 et sortie 12 de la chambre de filtration 10.

Un bac à résidus 22 est monté sur la chambre de filtration 10 pour récupérer les impuretés retenues par les filtres 19 et 21, ainsi que par les moyens de filtration électrostatique 20.

Enfin, un filtre à charbon actif 23 est monté dans la chambre de filtration 10, entre le filtre 21 et la sortie 12. Ce filtre est destiné à réaliser une finition de filtration par l'adsorption de gaz, en particulier de gaz odorants, non adsorbés par les particules solides des gaz d'échappement.

La chambre de filtration 10 est bien sûr réalisée de manière à pouvoir y accéder, afin de pouvoir nettoyer les filtres, par lavage, ou changer ceux-ci.

Comme illustré sur la figure 2, le dispositif de filtration 1 est installé dans le coffre du véhicule automobile 2, grâce à des moyens de montage non représentés.

Grâce à un tel dispositif, les gaz d'échappement sont refroidis de manière efficace avant leur entrée dans la chambre de filtration 10, ceux-ci ayant en général une température de plus de 400°C avant refroidissement.

Dans le cas, par exemple, d'un moteur Diesel, le filtre 19 retient notamment les particules carbonées, les sels inorganiques et autres poussières grossières ainsi que les brouillards et émulsions huileuses contenues dans les gaz d'échappement, mais également des gouttelettes d'eau provenant de l'air ambiant extérieur et autres émanations de gasoil.

On notera à cet égard, que le dispositif de filtration 1 de la présente invention filtre, non seulement les gaz d'échappement du véhicule automobile 2 sur lequel il est monté, mais également l'air ambiant chargé d'émissions polluantes.

En particulier, grâce à sa structure, ce dispositif est efficace, à bas régime comme à haut régime, depuis le démarrage jusqu'à l'arrêt du moteur à combustion interne d'un véhicule automobile quelconque (voiture, bateau ...), sans étouffer le moteur.

Le dispositif de filtration de la présente invention s'avère également particulièrement intéressant dans le cas de moteurs à essence, en particulier pour la filtration des particules de plomb contenues dans leurs gaz d'échappement.

Bien entendu, la présente demande ne se limite nullement au mode de réalisation choisi représenté, mais englobe toute variante à la portée de l'homme du métier.

En particulier, les moyens d'aspiration 16 pourront être entraînés par le moteur à combustion interne, par l'intermédiaire d'une courroie de transmission. Ils pourront également être constitués par un moto-ventilateur centrifuge ou un extracteur en lieu et place de la moto-turbine.

On pourra également prévoir un circuit électrique muni d'un voyant lumineux, destiné à indiquer la saturation des moyens de filtration électrostatique. Un circuit similaire pourra être prévu pour indiquer la saturation du filtre à charbon actif 23.

Le filtre 21 pourra également être différent du filtre 19, et comporter, en particulier, des filets à maillage plus fin. Un filtre, tel que le filtre 19 ou 21 pourra également être prévu entre les deux étages des moyens de filtration électrostatique 20. On notera à cet égard, que le dispositif de filtration sèche 1 de la présente invention peut être adapté, par le choix des filtres, à tout moteur à combustion interne, en garantissant que la majeure partie des substances polluantes des gaz d'échappement sont retenues par le dispositif. Par ailleurs, on pourra également prévoir une combinaison d'un filtre à chocs et d'un filtre autre en lieu et place du seul filtre 19.

En outre, on pourra monter une plaque mélangeuse entre l'entrée 11 et le filtre 19.

Par ailleurs, la structure et la disposition des éléments constitutifs des moyens de filtration électrostatique pourront être différents (plusieurs cellules de filtration côte à côte, nombre d'étages choisi selon la cylindrée du moteur ...).

Enfin, on pourra coupler les moyens d'aspiration au système d'accélération du véhicule pour réguler l'admission d'air ambiant.

## Revendications

1. Dispositif de filtration (1) des gaz d'échappement d'un moteur à combustion interne, comportant une chambre de filtration (10) électrostatique équipée de moyens de filtration électrostatique (20), une ligne d'amenée (13) des gaz d'échappement dans la chambre de filtration (10), raccordée fluidiquement à une entrée (11) de la chambre de filtration (10), à l'une des extrémité de la ligne d'amenée (13), l'autre extrémité de la ligne d'amenée (13) étant pourvue d'une embouchure (14) dont l'orifice d'entrée est adapté à permettre la pénétration des gaz d'échappement ainsi que d'un flux d'air ambiant destiné à abaisser la température des gaz d'échappement, caractérisé en ce que des moyens d'aspiration (16) destiné à aspirer les gaz d'échappement et le flux d'air sont montés en aval d'une sortie (12) de la chambre de filtration (10) et raccordés fluidiquement à cette sortie (12), pour faire passer le mélange de gaz d'échappement et d'air dans ladite chambre de filtration (10) et rejeter des gaz filtrés dans le milieu ambiant et en ce qu'un filtre à particules (19) solides grossières et à gouttelettes provenant du mélange est monté dans la chambre de filtration (10), en amont des moyens de filtration électrostatique (20).

2. Dispositif selon la revendication 1, caractérisé en ce que le filtre est un filtre à chocs.

3. Dispositif de filtration selon la revendication 1 ou 2, caractérisé en ce qu'un autre filtre (21) à particules solides et à gouttelettes est monté en aval des moyens de filtration électrostatique, dans la chambre de filtration (10).

4. Dispositif de filtration selon la revendication 3, caractérisé en ce que ledit autre filtre est un filtre à chocs.

5. Dispositif de filtration selon la revendication 3 ou 4, caractérisé en ce qu'un filtre à charbon actif (23) est monté dans la chambre de filtration (10), en aval dudit autre filtre (21).

6. Dispositif de filtration selon l'une quelconque des revendications 1 à 5, caractérisé en ce que les moyens de filtration électrostatique comportent deux étages de filtration ou plus.

7. Dispositif de filtration selon l'une quelconque des revendications 1 à 6, caractérisé en ce que la ligne d'amenée (13) comporte des moyens (14) adaptés à recevoir la sortie d'un pot d'échappement (15) ou d'un collecteur d'échappement raccordé au moteur à combustion interne.

8. Dispositif de filtration selon la revendication 7, caractérisé en ce que les moyens de réception comportent une buse conique dont la partie la plus large est destinée à recevoir la sortie du pot d'échappement ou du collecteur d'échappement.

9. Dispositif de filtration selon la revendication 8, caractérisé en ce que la paroi de la buse conique est percée de trous.

10. Dispositif de filtration selon l'une quelconque des revendications 1 à 9, caractérisé en ce que les gaz d'échappement sont refroidis jusqu'à une température inférieure à 100°C, de préférence jusqu'à une température inférieure ou égale à 80°C.

11. Dispositif de filtration selon l'une quelconque des revendications 1 à 10, caractérisé en ce qu'il comporte des moyens de montage sur un véhicule automobile.

12. Procédé de filtration des gaz d'échappement d'un moteur à combustion interne, consistant à refroidir les gaz d'échappement avec un apport d'air ambiant ; à filtrer ces gaz d'échappement dans une chambre de filtration (10) équipée de moyens de filtration électrostatique ; caractérisé en ce qu'il consiste à aspirer les gaz d'échappement et le flux d'air ambiant au travers de la chambre de filtration et à filtrer le mélange de gaz d'échappement et d'air ambiant, au moyen d'un filtre à particules solides grossières et à gouttelettes, placé en amont des moyens de filtration électrostatique.

13. Procédé selon la revendication 12, caractérisé en ce que l'on filtre en outre le mélange de gaz d'échappement et d'air ambiant provenant des moyens de filtration électrostatique, au moyen d'un autre filtre à particules solides et à gouttelettes.

14. Procédé selon la revendication 13, caractérisé en ce que l'on filtre, en outre, le mélange de gaz d'échappement et d'air ambiant provenant de l'autre filtre au moyen d'un filtre à charbon actif.

15. Véhicule automobile (2) équipé d'un dispositif de filtration (1) selon l'une quelconque des revendications 1 à 11.

## Patentansprüche

1. Vorrichtung (1) zum Filtern der Abgase eines Verbrennungsmotors, aufweisend eine Elektrostatikfilterkammer (10), die mit einem Mittel (20) zum elektrostatischen Filtern ausgestattet ist, eine Zuleitung (13) für die Abgase in die Filterkammer (10), welche fluidtechnisch mit einem Einlaß (11) der Filterkammer (10) an einem Ende der Zuleitung (13) verbunden ist, wobei das andere Ende der Zuleitung (13) mit einem Verengungsformstück (14) versehen ist, dessen Eingangsöffnung dafür ausgelegt ist, das Eindringen der Abgase sowie eines Flusses aus Umgebungsluft zuzulassen, welcher dafür bestimmt ist, die Temperatur der Abgase abzusenken, dadurch gekennzeichnet, dass Ansaugmittel (16), welche dafür bestimmt sind, die Abgase und den Luftfluß anzusaugen, stromabwärts eines Ausgangs (12) der Filterkammer (10) angebracht und fluidtechnisch mit diesem Ausgang (12) verbunden sind, um die Mischung aus Abgasen und Luft in die Filterkammer (10) einzuleiten und filtrierte Gase in die Umgebung auszustossen, und dass ein Filter (19) für grobe Feststoffteilchen und Tröpfchen, welche aus der Mischung stammen, in der Filterkammer (10) stromaufwärts des elektrostatischen Filtermittels (20) angebracht ist.

2. Vorrichtung nach Anspruch 1, dadurch gekennzeichnet, dass der Filter ein Stoßfilter ist.

3. Vorrichtung zum Filtern nach Anspruch 1 oder 2, dadurch gekennzeichnet, dass ein anderer Filter (21) für Feststoffteilchen und Tröpfchen stromabwärts des Mittels zum elektrostatischen Filtern in der Filterkammer (10) angebracht ist.

4. Vorrichtung zum Filtern nach Anspruch 3, dadurch gekennzeichnet, dass der andere Filter ein Stoßfilter ist.

5. Vorrichtung zum Filtern nach Anspruch 3 oder 4, dadurch gekennzeichnet, dass ein Aktivkohlefilter (23) in der Filterkammer (10) stromabwärts des anderen Filters (21) angebracht ist.

6. Vorrichtung zum Filtern nach einem der Ansprüche 1 bis 5, dadurch gekennzeichnet, dass das Mittel zum elektrostatischen Filtern zwei oder mehr Filterstufen aufweist.

7. Vorrichtung zum Filtern nach einem der Ansprüche 1 bis 6, dadurch gekennzeichnet, dass die Zuleitung (13) Mittel (14) aufweist, die dafür ausgelegt sind, den Ausgang eines Auspufftopfes (15) oder eines Abgassammlers, der mit dem Verbrennungsmotor verbunden ist, aufzunehmen.

8. Vorrichtung zum Filtern nach Anspruch 7, dadurch gekennzeichnet, dass die Aufnahmemittel eine konische Düse aufweisen, deren größter Teil dazu bestimmt ist, den Ausgang des Auspufftopfes oder des Abgassammlers aufzunehmen.

9. Vorrichtung zum Filtern nach Anspruch 8, dadurch gekennzeichnet, dass die Wand der konischen Düse mit Löchern versehen ist.

10. Vorrichtung zum Filtern nach einem der Ansprüche 1 bis 9, dadurch gekennzeichnet, dass die Abgase bis auf eine Temperatur abgekühlt wird, die kleiner ist als 100°C, vorzugsweise bis auf eine Temperatur, die kleiner oder gleich 80°C ist.

11. Vorrichtung zum Filtern nach einem der Ansprüche 1 bis 10, dadurch gekennzeichnet, dass sie Mittel zur Montage auf einem Kraftfahrzeug aufweist.

12. Verfahren zum Filtern der Abgase aus einem Verbrennungsmotor, welches die folgenden Schritte aufweist: Abkühlen der Abgase durch Zufuhr von Umgebungsluft; Filtern dieser Abgase in einer Filterkammer (10), die mit einem Mittel zum elektrostatischen Filtern ausgestattet ist, dadurch gekennzeichnet, dass es die Schritte des Ansaugens der Abgase und des Flusses aus Umgebungsluft über die Filterkammer und des Filterns der Mischung aus Abgasen und Umgebungsluft mittels eines Filters für grobe Feststoffteilchen und Tröpfchen, welcher stromaufwärts des Mittels zum elektrostatischen Filtern angeordnet ist, aufweist.

13. Verfahren nach Anspruch 12, dadurch gekennzeichnet, dass die Mischung aus Abgasen und Umgebungsluft, die aus dem Mittel zum elektrostatischen Filtern stammt, außerdem mittels eines Filters für Feststoffteilchen und Tröpfchen gefiltert wird.

14. Verfahren nach Anspruch 13, dadurch gekennzeichnet, dass die Mischung aus Abgasen und Umgebungsluft, welche vom anderen Filter stammt, des weiteren mittels eines Aktivkohlefilters gefiltert wird.

15. Kraftfahrzeug (2), das mit einer Einrichtung (1) zum Filtern gemäß einem der Ansprüche 1 bis 11 ausgestattet ist.

## Claims

1. Device (1) for filtering internal combustion engine exhaust gasses, comprising an electrostatic filtering chamber (10) equipped with electrostatic filtering means (20), a line (13) for supplying exhaust gasses into the filtering chamber (10), in fluid communication with an inlet (11) of the filtering chamber (10), at one of the ends of the supply line (13), the other end of the supply line (13) being provided with an opening (14) whose inlet orifice is adapted to allow the penetration of the exhaust gasses and of a flow of ambient air intended for lowering the temperature of the exhaust gasses, characterised in that intake means (16), intended for drawing in the exhaust gasses and the air flow are mounted downstream of an outlet (12) of the filtering chamber (10) and in fluid communication with this outlet (12), in order to allow the mixture of exhaust gasses and air to pass into the said filtering chamber (10) and to reject the filtered gasses into the environment and in that a filter (19) for coarse solid particles and droplets derived from the mixture is mounted in the filtering chamber (10), upstream of the electrostatic filtering means (20).

2. Device according to Claim 1, characterised in that the filter is an impingement-type filter.

3. Device according to Claim 1 or 2, characterised in that another filter (21) for coarse solid particles and droplets is mounted downstream of the electrostatic filtering means, in the filtering chamber (10).

4. Filtering device according to Claim 3, characterised in that the said other filter is an impingement-type filter.

5. Filtering device according to Claim 3 or 4, characterised in that an active carbon filter (23) is mounted in the filtering chamber (10) downstream of the said other filter (21).

6. Filtering device according to any one of Claims 1 to 5, characterised in that the electrostatic filtering means comprise two or more filtering stages.

7. Filtering device according to any one of Claims 1 to 6, characterised in that the supply line (13) comprises means (14) adapted to receive the outlet of an exhaust silencer box (15) or of an exhaust manifold connected to the internal combustion engine.

8. Device according to Claim 7, characterised in that the receiving means comprise a conical nozzle whose widest part is intended to receive the outlet of the exhaust silencer box or of the exhaust manifold.

9. Filtering device according to Claim 8, characterised in that the wall of the conical nozzle is pierced with holes.

10. Filtering device according to any one of Claims 1 to 9, characterised in that the exhaust gasses are cooled down to a temperature of less than 100°C and preferably down to a temperature of less than or equal to 80°C.

11. Filtering device according to any one of Claims 1 to 10, characterised in that it comprises means of fitting to a motor vehicle.

12. Method of filtering the exhaust gasses of an internal combustion engine consisting in cooling the exhaust gasses by the addition of ambient air; in filtering these exhaust gasses in a filtering chamber (10) equipped with electrostatic filtering means; characterised in that it consists in drawing the exhaust gasses and the ambient air flow through the filtering chamber and in filtering the mixture of exhaust gasses and ambient air by means of a filter for coarse solid particles and droplets, placed upstream of the electrostatic filtering means.

13. Method according to Claim 12, characterised in that the mixture of exhaust gasses and ambient air coming from the electrostatic filtering means is also filtered by means of another filter for coarse solid particles and droplets.

14. Method according to Claim 13, characterised in that the mixture of exhaust gasses and ambient air coming from the other filter is also filtered by means of an active carbon filter.

15. Motor vehicle (2) equipped with a filtering device (1) according to any one of Claims 1 to 11.
